# EUROPEAN PATENT SPECIFICATION

(11) **EP 2 007 090 B1**
(45) Date of publication and mention of the grant of the patent: **19.06.2013**
(21) Application number: 07720451.9
(22) Date of filing: 19.03.2007
(51) Int. Cl.: H04L 12/66

(54) **AN INTEGRATION MEDIA GATEWAY DEVICE, COMMUNICATION SYSTEM AND THE METHOD FOR SWITCHING DATA**
INTEGRATIONS-MEDIEN-GATEWAYEINRICHTUNG, KOMMUNIKATIONSSYSTEM UND VERFAHREN ZUM VERMITTELN VON DATEN
DISPOSITIF PASSERELLE MÉDIA D'INTÉGRATION, SYSTÈME DE COMMUNICATION ET PROCÉDÉ DE COMMUTATION DE DONNÉES

(30) Priority: 17.03.2006 CN 200610065333
(43) Date of publication of application: 24.12.2008
(73) Proprietor: Huawei Technologies Co., Ltd., Longgang District, Shenzhen Guangdong 518129 (CN)
(72) Inventor: WANG, Dahai, Shenzhen Guangdong Province 518129 (CN)
(74) Representative: Kreuz, Georg Maria
(86) International application number: PCT/CN2007/000874
(87) International publication number: WO 2007/107102

(56) References cited:
- CN-A- 1 585 386
- CN-A- 1 627 737
- CN-A- 1 630 278
- KR-A- 20050 117 233
- US-A1- 2003 169 768
- US-A1- 2005 007 993
- US-A1- 2005 076 108
- 3GPP: "3rd Generation Partnership Project;Technical Specification Group Services and System Aspects;Bandwidth and Resource Savings and Speech Enhancements for CS Networks (BARS)(Release 6)" 3GPP DRAFT; 23977-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Beijing, china; 20040607, 7 June 2004 (2004-06-07), XP050202470 [retrieved on 2004-06-07]
- CHAPRON J-E ET AL: "An analysis of the IN call model suitability in the context of VoIP" COMPUTER NETWORKS, ELSEVIER SCIENCE PUBLISHERS B.V., AMSTERDAM, NL, vol. 35, no. 5, 1 April 2001 (2001-04-01), pages 521-535, XP004304864 ISSN: 1389-1286

## Description

### Field of the Intention

The present invention relates to the field of communication technologies, and in particular to an integrated media gateway device, a communication system and a data conversion method.

### Background of the Invention

Most of the traditional mobile switching centers are developed from software, hardware and operation system platforms originally specific to fixed switches, in which service bearing and call control are integrated. Different developers adopt their own private operation platforms, software and hardware instead of open computer hardware and platforms, which may give rise to a high cost in the aspects of device purchase, software/hardware update and maintenance, etc.

As Internet technologies develop and as a demand of information sharing grows, integration of computer networks and communication networks becomes an inevitable trend. However, implementing a mostly text-based Internet Protocol (IP) on a binary-based platform will be a great challenge to traditional switching devices (e.g., a mobile switching center) designed purely for telephone services. This is because differences in design ideas make it difficult for developers of traditional switching devices to develop IP interfaces on their private platforms. Moreover, implementation of any IP interface has to be started from the very beginning, costs too much in developing, and cannot make use of mature IP technologies and products on the market.

There is therefore a demand for developing a third generation calling server and a third generation media gateway separate from each other based upon an open and standard computer platform.

In such an architecture where a calling server and a media gateway are separated from each other, the functions of the calling server (i.e., a softswitch) is primarily to control services of all media gateways at the edge access layer and communication between the media gateways, and the functions of the media gateway is primarily to provide mobile subscribers and services with an access to a soft switching network, to convert data formats and protocols, to format accessed media information streams into data packets with an IP protocol and to transfer the data packets over the soft switching network by various approaches. Upon such a separation, the media gateway can be deployed in an area with a low user density, while the calling server is positioned remotely and managed centrally. Further, the media gateway can be connected with two or more calling servers, thus if one calling server fails, other calling servers can take the place thereof and function as redundant backups, thereby improving reliability of the entire network and enabling an operator to perform different device configurations with respect to different user densities.

For the above separate architecture, existing implementations adopt the idea of exclusive use for a particular network, for instance, a Wideband Code Division Multiple Access (WCDMA) media gateway exclusively for a WCDMA network, a CDMA2000 media gateway exclusively for a CDMA2000 network, a fixed Voice over IP (VOIP, Internet telephony) media gateway exclusively for a fixed VOIP network, etc. When interconnectivity and intercommunication between different networks is involved, one or more gateway office gateway devices are deployed to typically provide intercommunication only with a network of a specific type or only with a Public Switched Telephone Network (PSTN) through which all networks are interconnected.

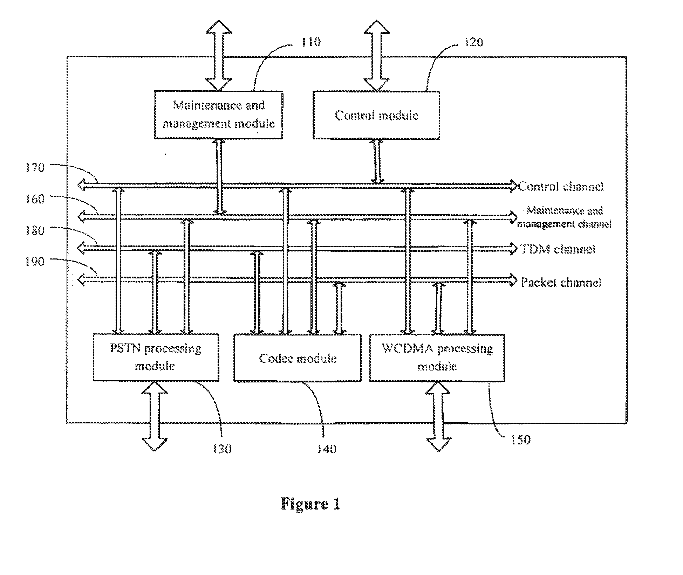

As illustrated in Figure 1, the intercommunication and conversion between a PSTN network and a WCDMA network are taken as an example. The media gateway device includes a maintenance and management module 110, a control module 120, a PSTN processing module 130, a codec module 140 and a WCDMA processing module 150, Particularly, the maintenance and management module 110 manages and maintains the PSTN processing module 130, the codec module 140 and the WCDMA processing module 150 through a maintenance and management channel 160; the control module 120 controls the PSTN processing module 130, the codec module 140 and the WCDMA processing module 150 through a control channel 170 to accomplish corresponding operations; the PTSN processing module 130 provides an input interface for PSTN data and exchanges data with the codec module 140 through a Time Division Multiplexing (TDM) channel 180; the WCDMA processing module 150 provides an access interface for WCDMA data and exchanges data with the codec module 140 through a packet channel 190; and the codec module 140 provides a codec resource for intercommunication and conversion between WCDMA data and PSTN data. The control module 120 in the media gateway device controls the codec module 140 to implement data conversion between accessed WCDMA data and PSTN data.

Since the existing media gateway devices provide intercommunication capability only for a specific type of networks, gateways have to be located between every two different types of networks for intercommunication between the networks, which may result in a great increase in the number and types of devices, a complicated structure of the networks, and high capital and operational expenditure. Further, it is a future development trend that most operators will be integrated operators, and thus networking with the above devices and approaches may bring an unsatisfactory effect in terms of achieving across-network intercommunication for the integrated operators in possession of numerous different types of networks. Further, the policy of exclusive use for a particular network may lead to repeated investments of gateway devices because various networks such as Global System of Mobile Communication (GSM), WCDMA, CDMA2000, IP Multimedia System (IMS), Next Generation Network (NGN), fixed network, etc., can not be supported concurrently with services by means of a same set of gateway devices.
US 2005/076108 A1 discloses methods and systems for per-session NAT learning and firewall filtering in media gateway.
US 2005/007993 A1 discloses a system and method for increasing the efficiency of a cellar communication network, so as to reduce ongoing operating costs and increase revenue.
US 2004/0208132 A1 discloses a method for operating a media gateway with bearer path control and tone allocation in a telecommunication system.
WO 03/056776 A1 discloses a method for negotiation between two gateway controllers, wherein the gateway controllers manage, in a link-independent manner, a codec list with codec types which are supported by the respective media gateway, thereby avoiding ultimate disconnection of a set-up link as a result of unsupported codecs,

### Summary of the Invention

Embodiments of the invention provide an integrated media gateway device, a communication system and a data conversion method so that bearer intercommunication and conversion of data between different networks can be implemented by only one gateway device.

The integrated media gateway device according to the present invention comprises a control module, a broadband processing module, a narrowband processing module and a codec module:
the control module is adapted to control the broadband processing module, the narrowband processing module and the codec module;
the broadband processing module is adapted to provide access interfaces for various broadband data so as to access the broadband data and abstract corresponding packet terminations under the control of the control module; wherein each packet termination corresponds to one of the access interfaces for various broadband data;
the narrowband processing module is adapted to provide access interfaces for various narrowband data so as to access the narrowband data and abstract corresponding TDM terminations under the control of the control module; wherein each TDM termination corresponds to one of the access interfaces for various narrowband data; and
the codec module contains codec resources and is adapted to provide a codec resource under the control of the control module; the provided codec resource is corresponding to a service parameter of one of the packet terminations and a service parameter of one of the TDM terminations; wherein the codec resource is inserted between one of the packet terminations and one of the TDM terminations to accomplish conversion between the various broadband data and the various narrowband data.

An embodiment of the invention further provides a communication system, comprising an integrated media gateway device, a softswitch device and an operation support system; wherein the integrated media gateway device includes a maintenance and management module connected with the operation support system, a control module connected with the softswitch device wherein the integrated media gateway device is an integrated media gateway device of any one of claims 1 to 3.

An embodiment of the invention further provides a data conversion method in a gateway device including:
abstracting, by the gateway device, a corresponding packet termination when the accessed data is broadband data;
abstracting, by the gateway device, a corresponding Time Division Multiplexing, TDM, termination when the accessed data is narrowband data; and
selecting a corresponding codec resource based upon a service parameter of the packet termination and a service parameter of the TDM termination; wherein the codec resource is inserted between the packet termination and the TDM termination to accomplish conversion between the broadband data and the narrowband data.

In the integrated media gateway device and the communication system according to the embodiments of the invention, various types of data can be accessed therein. Terminations can be abstracted for the various types of data after the data are accessed into the integrated media gateway device, and codec resources in the codec module for conversion of the various types of data can be invoked based upon a service parameter of the respective terminations. Due to various interfaces provided by the broadband processing module, the narrowband processing module in the integrated media gateway device and the plentitude of codec resources in the codec module, non-fixed and diverse intercommunication and conversion can be enabled under the control of the control module, thereby improving flexibility of network building.

### Brief Description of the Drawings

Figure 1 is a structural diagram of a media gateway device in the related art;

Figure 2 is a structural diagram of an integrated media gateway device according to an embodiment of the invention

Figure 3 is a diagram of performing intercommunication and conversion by an integrated media gateway device according to the embodiment of the invention;

Figure 4 is a diagram of performing a conversion from PSTN to WCDMA by an integrated media gateway device according to the embodiment of the invention;

Figure 5 is a flow chart of a data conversion method according to an embodiment of the invention; and

Figure 6 is a structural diagram of an embodiment of a control module in the integrated media gateway device illustrated in Figure 2.

### Detailed Description of the Embodiments

An integrated media gateway device according to the embodiments of the invention stores various codec resources in a codec module, and different codec resources are invoked by a control module controlling the codec module, so that the integrated media gateway device according to the embodiments of the invention can perform intercommunication and conversion between various data.

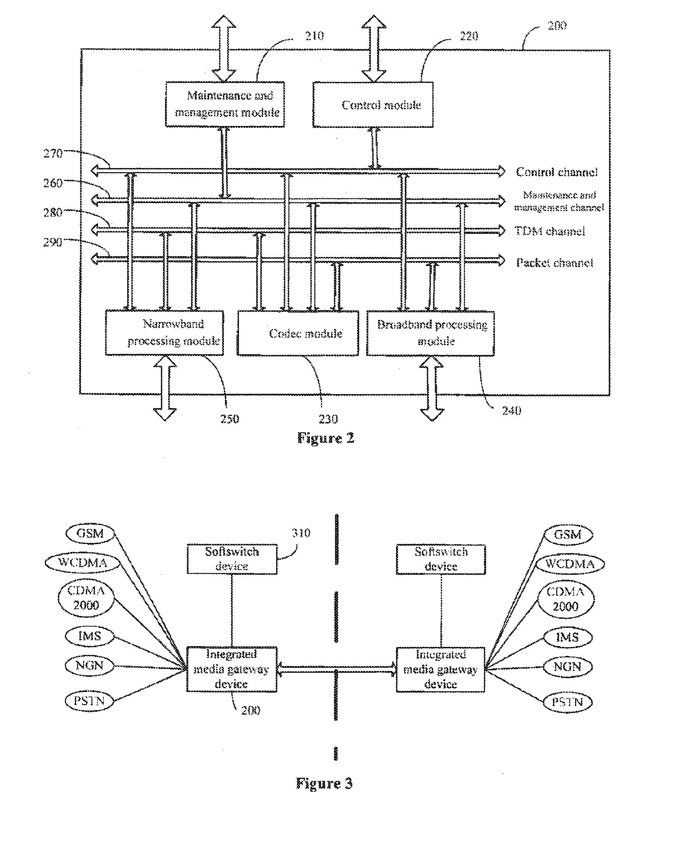

As illustrated in Figure 2, an integrated media gateway device according to the embodiments of the invention includes a maintenance and management module 210, a control module 220, a codec module 230, a broadband processing module 240 and a narrowband processing module 250.

The maintenance and management module 210 connected with a maintenance and management channel 260, is responsible for management and maintenance of the entire gateway device 200, and cooperates with an operation support system (which is not shown in the Figure) outside the device via an external interface of the gateway device 200 to provide the integrated media gateway device 200 with maintenance and management functions such as configuration, alarms, logs, debugging, etc.

The control module 220 is a control core of the gateway device and is responsible for controlling the broadband processing module 240, the narrowband processing module 250 and the codec module 230, such as controlling the broadband processing module 240 to access broadband data and to abstract a data termination; controlling the narrowband processing module 250 to access narrowband data and to abstract a data termination; and controlling the codec module 230 to perform conversion between different types of data using different codec resources based upon service parameters of different data terminations.

The control module 220 is connected with a softswitch device (which is not shown in the Figure) via an external interface of the gateway device in an interface protocol such as Media Gateway Control Protocol (MGCP) or H.248, and receives a control command from the softswitch device. The control module 220 maps an instruction from a softswitch-type external device to an operation instruction for other internal modules, and thus accomplishes abstraction of a gateway call or session model. For instance, if the interface protocol is H.248. an associated H.284 context can be created, removed and maintained internally to the gateway device based upon an H.248 instruction from the softswitch device.

The narrowband processing module 250 is adapted to abstract a TDM termination under the control of the control module 220 and provide an access interface for various narrowband data. The access interface of the narrowband processing module 250 includes any one or a combination of an A-interface access interface for GSM, an A-interface access interface for CDMA2000, an intercommunication relay circuit interface to PSTN, an interface to an Access Network (AN), a core network side circuit interface for a WCDMA network, a core network side circuit interface for a CDMA2000 network and a core network side circuit interface for a GSM network. The narrowband processing module 250 can provide the above types of data with an access to the integrated media gateway device under the control of the control module 220 and with respect to the various types of data accessed to the integrated media gateway device, the narrowband processing module 250 abstract a termination of the data under the control of the control module 220 in order to convert different types of data.

Several possible access interfaces of the narrowband processing module have been listed above by way of example. As can be appreciated by those skilled in the art, the access interfaces of the narrowband processing module are not limited to the access interfaces listed above, and any possible access interfaces for accessing narrowband data can be applied in the embodiments of the invention.

The broadband processing module 240 is adapted to abstract a packet termination under the control of the control module 220 and provide access interfaces for various broadband data. The access interface of the broadband processing module 240 includes any one or a combination of an Asynchronous Transfer Mode (ATM) access interface of a R4 In interface for CDMA, an IP access interface of a Radio Access Network (RAN) for WCDMA, an IP access interface of a RAN for CDMA2000, a uni-domain or across-domain IP intercommunication interface to an IMS domain and an IP/ATM connection interface at a core network side of a mobile network. The broadband processing module 240 can provide the above types of data with an access to the integrated media gateway device under the control of the control module 220; and with respect to the various types of data accessed to the integrated media gateway device, the broadband processing module 240 abstracts a termination of the data under the control of the control module 220 in order to convert different types of data.

Several possible access interfaces of the broadband processing module have been listed above by way of example. As can be appreciated by those skilled in the art, the access interfaces of the broadband processing module are not limited to the access interfaces listed above, and any possible access interfaces for accessing broadband data can be applied in the embodiments of the invention

The codec module 230 is adapted to provide codec resources required for converting between different types of data accessed via the broadband processing module 240 and/or the narrowband processing module 250 under the control of the control module 220. The codec module 230 contains any or a combination of a WCDMA codec resource, a CDMA2000 codec resource, an IMS codec resource, a VOIP codec resource, an Echo Canceller (EC) codec resource, a Voice Quality Enhancement (VQE) codec resource, an Inter-Working Function (IWF) codec resource, a Multi-Party (MPTY)/conference codec resource, a video intercommunication codec resource, a FAX/MODEM adaptation codec resource.

Several possible codec resources have been listed above by way of example. As can be appreciated by those skilled in the art, the codec resources in the codec module are not limited to the codec resources listed above, and any possible codec resource can be applied in the embodiments of the invention.

The control module 220 invokes respective codec resources in the codec module 220 for conversion between the different type of data based upon termination service parameters of the different types of data accessed by the broadband processing module 240 and/or the narrowband processing module 250.

The maintenance and management channel 260 provides the integrated gateway device 200 with a channel which is used for device management and maintenance, and the maintenance and management module 210 manages and maintains other modules in the integrated gateway device 200 through the maintenance and management channel 260.

The TDM channel 280 provides the integrated gateway device 200 with a TDM channel, and communications can be conducted between the interfaces of the narrowband processing module 250 and between the narrowband processing module 250 and the codec module 230 through the TDM channel 280.

The packet channel 290 provides the integrated gateway device 200 with a packet channel, and communication can be conducted between the interfaces of the broadband processing module 240 and between the broadband processing module 240 and the codec module 230 through the packet channel 290. A particular implementation can be based upon IP switching or ATM switching.

The control channel 270 provides the integrated gateway device 200 with a control channel, and the control module 220 issues control instructions to the narrowband processing module 250, the broadband processing module 240 and the codec module 230 through the control channel 270.

In an embodiment of the present invention, the codec module 230 can provide different types of codec resources, and the broadband processing module 240 and the narrowband processing module 250 can provide interfaces for different types of data, so that the control module 220 can select a corresponding codec resource from the codec module 230 based upon different types of data accessed via the broadband processing module 240 and the narrowband processing module 250. Therefore the integrated media gateway device 200 according to the embodiments of the invention can be ensured a strong adaptability.

As illustrated in Figure 3, the integrated media gateway device 200 according to an embodiment of the invention can implement data conversion between GSM or WCDMA or CDMA2000 or IMS or NGN or PSTN networks under the control of a softswitch device 310, and an integrated operator can fulfill the requirements of an integrated access to numerous networks for interconnection and intercommunication between respective networks by means of the integrated media gateway device 200 according to the embodiments of the invention.

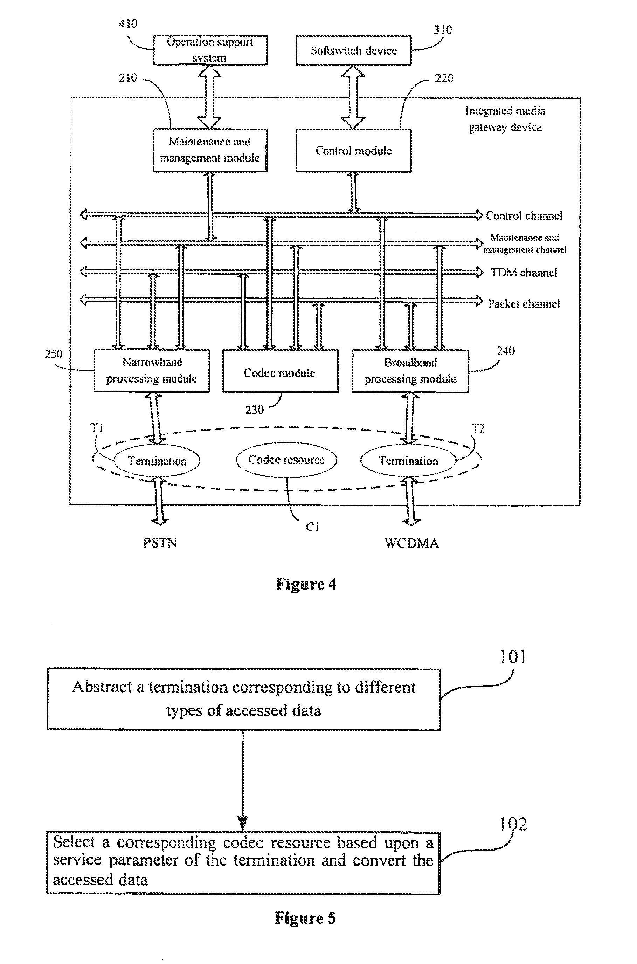

Next, as illustrated in Figure 4, it is a schematic diagram of a PSTN to WCDMA conversion implemented by the integrated media gateway device according to an embodiment of the invention. Particularly, the maintenance and management module 210 is connected with an external operation support system 410 via an external interface of the integrated media gateway device according to an embodiment of the invention, receives configuration information of the operation support system 410 and provides maintenance and management functions of configuration, alarms, logs, debugging, etc., for the integrated media gateway device according to an embodiment of the invention

The control module 220 is connected with the softswitch device 310 capable of integrated calling and service control via an external interface of the integrated media gateway device according to the embodiments of the invention. A resource operating protocol between the control module 220 and the softswitch device 310 is the H.248. The control module 220 receives a control instruction from the sotfswitch device 310 and performs a corresponding operation.

After a call from a PSTN network arrives at and is accepted by the softswitch device 310, the softswitch device 310 issues an instruction to the control module 220 in the integrated media gateway device according to an embodiment of the invention so as to create a context in the integrated media gateway device, and the control module 220 controls the narrowband processing module 250 to access PSTN data. At the same time, the control module 220 controls the narrowband processing module 250 to abstract a PSTN data termination denoted with T1, and the control module 220 controls the broadband processing module 240 to abstract a termination denoted with T2 from accessed WCDMA data. The softswitch device 310 issues corresponding PSTN and WCDMA service parameters to the above terminations T1 and T2, and the control module 220 invokes a corresponding codec resource from the codec module 230 based on the service parameters corresponding to the terminations. For instance, a PSTN-WCDMA codec resource C1 is inserted between the terminations T1 and T2, and data conversion from PSTN to WCDMA is accomplished.

The integrated media gateway device according to the embodiments of the invention has been described by way of an example of a PSTN to WCDMA conversion. A conversion between different broadband data, between different narrowband data and from broadband data to narrowband data in addition to the above conversion from narrowband data to broadband data can also be implemented according to an embodiment of the present invention based upon the same conversion principle as above. It is only required that the integrated media gateway device creates a context, a corresponding data processing module (i.e. the broadband processing module and/or the narrowband processing module) abstracts a corresponding termination, the softswitch issues service parameters corresponding to the termination, and the integrated media gateway device selects a corresponding codec resource for conversion between different types of data from the codec module based upon these service parameters.

According to an embodiment of the invention, a corresponding codec resource can be selected for conversion of data formats based upon a type of the accessed data. For instance, conversion between any two following types of data can be accomplished based upon any or a combination of a CDMA2000 codec resource, an IMS codec resource, a VOIP codec resource, an EC codec resource, a VQE codec resource, an IWF codec resource, a MPTY/conference codec resource, a video intercommunication codec resource and a FAX/MODEM adaptation codec resource stored in the codec module.

An embodiment of the invention further provides a data conversion method, as illustrated in Figure 5, including:
Step 101: abstracting a termination corresponding to different types of accessed data; and
Step 102: selecting a corresponding codec resource based upon a service parameter of the terminations and converting the accessed data.

The above data conversion method can be implemented by a gateway device, such as an integrated media gateway device according to an embodiment of the invention.

During data conversion according the above method, the gateway device abstracts a termination corresponding to different types of accessed data and converts the accessed data based upon a corresponding codec resource. Specifically, an implementation can be: the above gateway device creates internally a context under the control of a softswitch device, the softswitch device issues a corresponding service parameter to the termination abstracted by the gateway device, and the gateway device selects internally a corresponding codec resource based upon the service parameter corresponding to the abstracted termination and inserts the codec resource between the terminations to accomplish conversion between different types of accessed data.

The above gateway accesses corresponding narrowband data via a narrowband interface and/or accesses corresponding broadband data via a broadband interface. The narrowband interface via which narrowband data is accessed can be any or a combination of an A-interface access interface for GSM, an A-interface access interface for CDMA2000, an intercommunication relay circuit interface to PSTN, an interface to an AN, and a core network side circuit interface for a WCDMA, CDMA2000 and/or GSM network. The broadband interface via which broadband data is accessed can be any or a combination of an R4 Iu interface ATM access interface for CDMA, an RAN IP access interface for WCDMA, an RAN IP access interface for CDMA2000, a uni-domain or across-domain IP intercommunication interface to an IMS domain, and an IP/ATM connection interface at a core network side of a mobile network.

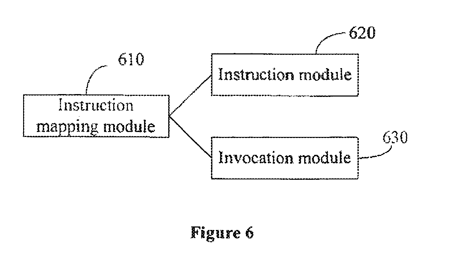

Figure 6 is a schematic diagram of a possible structure of the control module in an integrated media gateway device according to an embodiment of the invention.

Referring to Figure 4 and Figure 6 together, the control module 220 includes an instruction mapping module 610 adapted to map an instruction from the external softswitch device 310 to an operation instruction;
an instruction module 620, adapted to control based upon the operation instruction the broadband processing module 240 and/or the narrowband processing module 250 to access data and to extract a corresponding termination; and
an invocation module 630, adapted to invoke from the codec module 230 a codec resource required for converting the accessed data based upon a service parameter issued by the external softswitch device 310 for the termination.

In an integrated media gateway device and a communication system according to the embodiments of the invention, various types of data can be accessed therein. Terminations can be abstracted for the various types of data after being accessed into the integrated media gateway device, and codec resources for conversion of the various types of data in the codec module can be invoked based upon a service parameter of the respective terminations to implement conversation between different types of data. The various interfaces provided by the broadband processing module, the narrowband processing module in the integrated media gateway device, and the plentitude of the codec resources in the codec module enable the non-fixed and diverse intercommunication and conversion under the control of the control module, thereby improving flexibility of network building

A data conversion method according to an embodiment of the invention can select a corresponding codec resource based upon a service parameter of a termination because the corresponding termination is abstracted for accessed data, and hence can enable non-fixed and diverse intercommunication and conversion, thereby improving flexibility of network building.

Although the implementation solutions of the present invention have been disclosed as above, they shall not be limited only to the applications listed in the description and the embodiments, but can be applied in various fields where the invention is suitable. The invention shall not be limited to the specific details of the description and the illustrative drawings presented and described herein, and therefore, those skilled in the art can readily make additional modifications without departing from the scope of the invention as defined in the appended claims.

## Claims

1. An integrated media gateway device (200), comprising a control module (220), a broadband processing module (240), a narrowband processing module (250) and a codec module (230), wherein :
the control module (220) is adapted to control the broadband processing module (240), the narrowband processing module (250) and the codec module (230);
the broadband processing module (240) is adapted to provide access interfaces for various broadband data, access the broadband data, and abstract corresponding packet terminations under the control of the control module; wherein each packet termination corresponds to one of the access interfaces for various broadband data;
the narrowband processing module (250) is adapted to provide access interfaces for various narrowband data, access the narrowband data, and abstract corresponding Time Division Multiplexing, TDM, terminations under the control of the control module; wherein each TDM termination corresponds to one of the access interfaces for various narrowband data; and
the codec module (230) contains codec resources and is adapted to provide a codec resource corresponding to a service parameter of one of the packet terminations and a service parameter of one of the TDM terminations under the control of the control module;
wherein the codec resource is inserted between the one of the packet terminations and the one of the TDM terminations to accomplish conversion between the various broadband data and the various narrowband data.

2. The integrated media gateway device according to claim 1, **characterized in that** the access interfaces of the narrowband processing module comprises any or a combination of an A-interface access interface for GSM, an A-interface access interface for CDMA2000, an intercommunication relay circuit interface to PSTN, an interface to an AN, a core network side circuit interface for a WCDMA network, a core network side circuit interface for a CDMA2000 network, and a core network side circuit interface for a GSM network.

3. The integrated media gateway device according to claim 1 or 2, **characterized in that** the codec module contains any or a combination of a WCDMA codec resource, a CDAM2000 codec resource, an IMS codec resource, a VOIP codec resource, an EC codec resource, a VQE codec resource, an IWF codec resource, an MPTY/conference codec resource, a video intercommunication codec resource, and a FAX/MODEM adaptation codec resource.

4. A communication system, comprising an integrated media gateway device (200), a softswitch device (310) and an operation support system (410), and the integrated media gateway device (200) comprises a maintenance and management module (210) connected with the operation support system (410) and a control module (220) connected with the softswitch device (310);
wherein the integrated media gateway device (200) is an integrated media gateway device of any one of claims 1 to 3.

5. A data conversion method in a gateway device, comprising:
abstracting, by the gateway device, a corresponding packet termination when the accessed data is broadband data;
abstracting, by the gateway device, a corresponding Time Division Multiplexing, TDM, termination when the accessed data is narrowband data; and
selecting (102) a corresponding codec resource based upon a service parameter of the packet termination and a service parameter of the TDM termination;
wherein the codec resource is inserted between the packet termination and the TDM termination to accomplish conversion between the broadband data and the narrowband data.

## Patentansprüche

1. Integrierte Mediengateway-Vorrichtung (200), die ein Steuermodul (220), ein Breitbandverarbeitungsmodul (240), ein Schmalbandverarbeitungsmodul (250) und ein Codec-Modul (230) umfasst, wobei
das Steuermodul (220) dafür ausgelegt ist, das Breitbandverarbeitungsmodul (240), das Schmalbandverarbeitungsmodul (250) und das Codec-Modul (230) zu steuern; das Breitbandverarbeitungsmodul (240) dafür ausgelegt ist, unter der Steuerung des Steuermoduls Zugriffsschnittstellen für verschiedene Breitbanddaten bereitzustellen, auf die Breitbanddaten zuzugreifen und entsprechende Paketabschlüsse zu abstrahieren; wobei jeder Paketabschluss einer der Zugriffsschnittstellen für verschiedene Breitbanddaten entspricht;
das Schmalbandverarbeitungsmodul (250) dafür ausgelegt ist, unter der Steuerung des Steuermoduls Zugriffsschnittstellen für verschiedene Schmalbanddaten bereitzustellen, auf die Schmalbanddaten zuzugreifen und entsprechende Zeitvielfachmultiplex-Abschlüsse, TDM-Abschlüsse, zu abstrahieren; wobei jeder TDM-Abschluss einer der Zugriffsschnittstellen für verschiedene Schmalbanddaten entspricht; und
das Codecmodul (230) Codec-Betriebsmittel enthält und dafür ausgelegt ist, unter der Steuerung des Steuermoduls ein Codec-Betriebsmittel bereitzustellen, das einem Dienstparameter eines der Paketabschlüsse und einem Dienstparameter eines der TDM-Abschlüsse entspricht;
wobei das Codec-Betriebsmittel zwischen dem einen der Paketabschlüsse und dem einen der TDM-Abschlüsse eingefügt wird, um eine Umsetzung zwischen den verschiedenen Breitbanddaten und den verschiedenen Schmalbanddaten zu erzielen.

2. Integrierte Mediengateway-Vorrichtung nach Anspruch 1, **dadurch gekennzeichnet, dass** die Zugriffsschnittstellen des Schmalbandverarbeitungsmoduls eine A-Schnittstellen-Zugriffsschnittstelle für GSM und/oder eine A-Schnittstellen-Zugriffsschnittstelle für CDMA2000 und/oder eine Interkommunikations-Relaisschaltungsschnittstelle für PSTN und/oder eine Schnittstelle für ein AN und/oder eine Schaltungsschnittstelle auf Kernnetzseite für ein WCDMA-Netz und/oder eine Schaltungsschnittstelle auf Kernnetzseite für ein CDMA2000-Netz und/oder eine Schaltungsschnittstelle auf Kernnetzseite für ein GSM-Netz umfassen.

3. Integrierte Mediengateway-Vorrichtung nach Anspruch 1 oder 2, **dadurch gekennzeichnet, dass** das Codec-Modul ein WCDMA-Codec-Betriebsmittel und/oder ein CDMA2000-Codec-Betriebsmittel und/oder ein IMS-Codec-Betriebsmittel und/oder ein VOIP-Codec-Betriebsmittel und/oder ein EC-Codec-Betriebsmittel und/oder ein VQE-Codec-Betriebsmittel und/oder ein IWF-Codec-Betriebsmittel und/oder ein MPTY/Konferenz-Codec-Betriebsmittel und/oder ein Videointerkommunikations-Codec-Betriebsmittel und/oder ein FAX/MODEM-Adaptions-Codec-Betriebsmittel umfasst.

4. Kommunikationssystem, das eine integrierte Mediengateway-Vorrichtung (200), eine Soft-Vermittlungsvorrichtung (310) und ein Betriebsunterstützungssystem (410) umfasst und die integrierte Mediengateway-Vorrichtung (200) ein Wartungs- und Management-Modul (210), das mit dem Betriebsunterstützungssystem (410) verbunden ist, und ein Steuermodul (220), das mit der Soft-Vermittlungsvorrichtung (310) verbunden ist, umfasst;
wobei die integrierte Mediengateway-Vorrichtung (200) eine integrierte Mediengateway-Vorrichtung nach einem der Ansprüche 1 bis 3 ist.

5. Datenumsetzungsverfahren in einer Gateway-Vorrichtung, das Folgendes umfasst:
Abstrahieren durch die Gateway-Vorrichtung eines entsprechenden Paketabschlusses, wenn die Daten, auf die zugegriffen wird, Breitbanddaten sind;
Abstrahieren durch die Gateway-Vorrichtung eines entsprechenden Zeitvielfachmultiplex-Abschlusses, TDM-Abschluss, wenn die Daten, auf die zugegriffen wird, Schmalbanddaten sind; und
Auswählen (102) eines entsprechenden Codec-Betriebsmittels anhand eines Dienstparameters eines Paketabschlusses und eines Dienstparameters des TDM-Abschlusses;
wobei das Codec-Betriebsmittel zwischen dem Paketabschluss und dem TDM-Abschluss eingefügt wird, um eine Umsetzung zwischen den Breitbanddaten und den Schmalbanddaten zu erzielen.

## Revendications

1. Dispositif de passerelle multimédia intégrée (200), comprenant un module de commande (220), un module de traitement à large bande (240), un module de traitement à bande étroite (250) et un module codec (230),
le module de commande (220) étant conçu pour commander le module de traitement à large bande (240), le module de traitement à bande étroite (250) et le module codec (230) ;
le module de traitement à large bande (240) étant conçu pour fournir des interfaces d'accès pour diverses données à large bande, accéder aux données à large bande, et abstraire des terminaisons de paquet correspondantes sous le contrôle du module de commande ; chaque terminaison de paquet correspondant à une des interfaces d'accès pour diverses données à large bande ;
le module de traitement à bande étroite (250) étant conçu pour fournir des interfaces d'accès pour diverses données à bande étroite, accéder aux données à bande étroite, et abstraire des terminaisons de multiplexage par répartition dans le temps, TDM, correspondantes sous le contrôle du module de commande ; chaque terminaison TDM correspondant à une des interfaces d'accès pour diverses données à bande étroite ; et
le module codec (230) contenant des ressources codec et étant conçu pour fournir une ressource codec correspondant à un paramètre de service d'une des terminaisons de paquet et à un paramètre de service d'une des terminaisons TDM sous le contrôle du module de commande ;
la ressource codec étant insérée entre la terminaison de paquet et la terminaison TDM pour accomplir une conversion entre les diverses données à large bande et les diverses données à bande étroite.

2. Dispositif de passerelle multimédia intégrée selon la revendication 1, **caractérisé en ce que** les interfaces d'accès du module de traitement à bande étroite comprennent un élément quelconque ou une combinaison des éléments suivants : une interface d'accès d'interface A pour GSM, une interface d'accès d'interface A pour CDMA2000, une interface de circuit de relais d'intercommunication vers RTC, une interface vers un AN, une interface de circuit du côté réseau coeur pour un réseau WCDMA, une interface de circuit du côté réseau coeur pour un réseau CDMA2000, et une interface de circuit du côté réseau coeur pour un réseau GSM.

3. Dispositif de passerelle multimédia intégrée selon la revendication 1 ou 2, **caractérisé en ce que** le module codec contient un élément quelconque ou une combinaison des éléments suivants : une ressource codec WCDMA, une ressource codec CDAM2000, une ressource codec IMS, une ressource codec VOIP, une ressource codec EC, une ressource codec VQE, une ressource codec IWF, une ressource codec de MPTY/conférence, une ressource codec d'intercommunication vidéo, et une ressource codec d'adaptation FAX/MODEM.

4. Système de communication, comprenant un dispositif de passerelle multimédia intégrée (200), un dispositif de commutateur logiciel (310) et un système de prise en charge d'opération (410), et le dispositif de passerelle multimédia intégrée (200) comprend un module de gestion et de maintenance (210) connecté au système de prise en charge d'opération (410) et un module de commande (220) connecté au dispositif de commutateur logiciel (310) ;
le dispositif de passerelle multimédia intégrée (200) étant un dispositif de passerelle multimédia intégrée selon l'une quelconque des revendications 1 à 3.

5. Procédé de conversion de données dans un dispositif de passerelle comprenant les étapes suivantes :
abstraire, par le dispositif de passerelle, une terminaison de paquet correspondante lorsque les données accédées sont des données à large bande ;
abstraire, par le dispositif de passerelle, une terminaison de multiplexage par répartition dans le temps, TDM, correspondante lorsque les données accédées sont des données à bande étroite ; et
sélectionner (102) une ressource codec correspondante sur la base d'un paramètre de service de la terminaison de paquet et d'un paramètre de service de la terminaison TDM;
la ressource codec étant insérée entre la terminaison de paquet et la terminaison TDM pour accomplir une conversion entre les données à large bande et les données à bande étroite.
